**Europäisches Patentamt**

**European Patent Office**

**Office européen des brevets**

(19)

(11) Veröffentlichungsnummer : **0 031 538**
**B1**

(12) **EUROPÄISCHE PATENTSCHRIFT**

(45) Veröffentlichungstag der Patentschrift :
21.11.85

(21) Anmeldenummer : 80107934.4

(22) Anmeldetag : 16.12.80

(51) Int. Cl.⁴ : **C 08 J 11/00, C 08 L 75/04,
B 29 B 17/00**

(54) Verfahren und Anlage zur Aufbereitung von aus Abfallstoffen erhaltenem Polyurethan.

(30) Priorität : 21.12.79 DE 2951617

(43) Veröffentlichungstag der Anmeldung :
08.07.81 Patentblatt 81/27

(45) Bekanntmachung des Hinweises auf die Patenterteilung : 21.11.85 Patentblatt 85/47

(84) Benannte Vertragsstaaten :
**CH FR GB IT LI**

(56) Entgegenhaltungen :
**EP-A- 0 001 679**
**DE-A- 2 759 054**
**DE-B- 1 229 720**
**US-A- 2 937 151**
**US-A- 3 123 577**
**US-A- 3 954 681**
**ADVANCES IN POLYURETHANE TECHNOLOGY Publ. MacLaren & Sons, LONDON (GB) Kapitel 1, Isocyanate Reactions, Seiten 7-8, 1.3.1.: "Primary Reactions"**
**PAUL F. BRUINS: "Polyurethane Technology", Kapitel 1, Interscience Publishers, LONDON (GB) Seiten 7-8: "Aliphatic Isocyanates"**

(73) Patentinhaber : Schütz, Wilhelm, Prof. Dr.-Ing.
Josef-Ponten-Strasse 60
D-5100 Aachen (DE)

(72) Erfinder : Schütz, Wilhelm, Prof. Dr.-Ing.
Josef-Ponten-Strasse 60
D-5100 Aachen (DE)

(74) Vertreter : EGLI-EUROPEAN PATENT ATTORNEYS
Horneggstrasse 4
CH-8008 Zürich (CH)

**Beschreibung**

Die Erfindung betrifft ein Verfahren und eine Anlage zur Aufbeteitung von aus Abfallstoffen erhaltenem Polyurethan durch Alkoholyse oder Acidolyse, wobei das Polyurethan zunächst mechanisch zu einem Ausgangsmaterial zerkleinert und anschliessend bei einer Temperatur von über 120 °C mit Lösungsmitteln behandelt wird.

Ein derartiges Verfahren ist aus der US-PS 2 937 151 bekannt. Wegen der schlechten Benetzbarkeit des Ausgangsmaterials mit Lösungsmitteln und wegen der geringen Zugänglichkeit des zellulösen Materials für den Stoffaustausch mit den inneren und äusseren Partikelflächen des Ausgangsmaterials wird nach dem bekannten Verfahren vorgeschlagen, die negativen Auswirkungen auf die Lösezeit durch eine Vorzerkleinerung des Ausgangsmaterials auf Schneidapparaten und Kollergängen zu vermindern. Eine die Lösungszeit wesentlich verkürzende Vorzerkleinerung des Ausgangsmaterials lässt jedoch Verschweissungen entstehen, die dem Lösungsmittel schwer zugänglich sind und deshalb unzureichend abgebaut werden. Bei dem bekannten Verfahren geht das Ausgangsmaterial daher erst bei Temperaturen über 250 °C in Lösung. Trotz der hohen Temperaturen, die zu qualitätsmindernden Verfärbungen führen, verbleiben bis zu 10 % ungelöste Rückstände des Ausgangsmaterials. Schliesslich erlaubt das bekannte Verfahren keine kontinuierliche Arbeitsweise.

Weiterhin ist aus der US-PS 3 123 577 ein Verfahren zur Aufbereitung bekannt, das zur Erreichung kürzerer Lösezeiten durch eine bessere Benetzung eine Zerkleinerung des Ausgangsmaterials durch eine Walzenmühle mit zwei Walzen bewerkstelligt. Durch unterschiedliche Walzendrehzahlen soll ein das Ausgangsmaterial zerreissender Zerkleinerungseffekt hervorgerufen werden, bei dem keine Agglomerate anfallen.

Obschon die Benetzbarkeit gegenüber dem zunächst beschriebenen bekannten Verfahren verbessert wird, sind neben dem Einsatz organischer Lösungsmittel und Katalysatoren Reaktionstemperaturen von 200 °C und mehr erforderlich, um die angestrebten kürzeren Lösezeiten zu erreichen. Schliesslich führt auch die Vorzerkleinerung nach diesem bekannten Verfahren nicht zu einer vollständigen Verflüssigung des Ausgangsmaterials, so dass gleichfalls feste Rückstände die Ausbeute beeinträchtigen.

Der Erfindung liegt die Aufgabe zugrunde, zu einem Verfahren zur Aufbereitung von aus Abfallstoffen erhaltenem Polyurethan zu gelangen, das während einer kurzen Behandlungsdauer zur vollständigen Lösung des Ausgangsmaterials führt, ohne dass dabei qualitätsmindernde Verfärbungen auftreten oder ungelöste Rückstände verbleiben.

Ausgehend vom eingangs beschriebenen Verfahren wird zur Lösung der gestellten Aufgabe vorgeschlagen, so zu verfahren, dass zumindest zu Beginn der bis zur Verflüssigung des Ausgangsmaterials andauernden Lösungsmittelbehandlung, die bei einer Reaktionstemperatur unter 200 °C durchgeführt wird, die mechanische Zerkleinerung des bereits im chemischen Abbau befindlichen Ausgangsmaterials fortgesetzt wird.

Im Gegensatz zu den bekannten Verfahren geht das erfindungsgemässe Verfahren davon aus, dass weder die Art noch der Grad der mechanischen Vorzerkleinerung für den Lösungsvorgang von Bedeutung ist und das Ausgangsmaterial beispielsweise auch auf Schneidmühlen mechanisch vorzerkleinert werden kann, wenn dabei Verschweissungen und Verklebungen im Ausgangsmaterial vermieden werden.

Das erfindungsgemässe Verfahren misst der Fortsetzung der mechanischen Zerkleinerung während der Lösungsmittelbehandlung verbunden mit der Erzeugung starker Scherfelder die entscheidende Bedeutung zu, da infolge der Beanspruchung der zu lösenden Teilchen deren äussere und innere Oberflächen nicht nur fortschreitend erschlossen werden, sondern auch durch die in den Scherfeldern erzeugten Impulsstromdichten gleichzeitig ein erhöhter Lösungsmittelkontakt bei wesentlich verbessertem Stofftransport erreicht wird, wodurch die Reaktions- und Lösezeiten verkürzt werden, ohne dass eine Verfärbungen hervorrufende Reaktionstemperatur über 200 °C erforderlich ist.

Nach einer Ausgestaltung des erfindungsgemässen Verfahrens wird das aus dem Ausgangsmaterial und Lösungsmitteln unter mechanischer Zerkleinerung und chemischem Abbau sich bildende Reaktionsgemisch im Gegenstrom zu einem die Oxydation verhindernden Schutzgas geführt, das die Reaktionszone durchspült und dabei aus dem Reaktionsgemisch freigesetzte Dämpfe und Gase abzieht.

Nach einer weiteren Ausgestaltung des erfindungsgemässen Verfahrens wird das Ausgangsmaterial in einer Stückgrösse bis zu 30 mm unter Vermischung mit Polyolen der vorzugsweise unter Ueberdruck betriebenen Reaktionszone zugeführt.

Mit dem erfindungsgemässen Verfahren lassen sich Oxydationseinflüsse durch Evakuation des Ausgangsgemisches und Zufuhr von $N_2$ als Schutzgas im Gegenstrom minimieren und die Dosierung und Benetzung des Ausgangsmaterials durch Vermischen mit Polyolen vor dem Eintritt in die Reaktionszone verbessern. Dadurch wird auch eine nachträgliche Agglomeration und Verschweissung des vorzerkleinerten Ausgangsmaterials verhindert und die Benetzung verbessert.

Für die weitere Aufbereitung der Alkoholyse-Produkte des erfindungsgemässen Verfahrens können Polyisocyanate, wie Isophorondiisocyanat, Trimethylhexamethylendiisocyanat, Cyclohexylen-1,4-diisocyanat und andere aliphatische Polyisocyanate verwendet werden.

Als weitere reaktive Komponenten zur Umwandlung der Alkoholyseprodukte in Präpolymere von Polyurethanen lassen sich die Addukte von Polyisocyanate, wie Isophorodiisocyanat, Hexamethyldiisocyanat, Trimethylhexamethylendiisocyanat, Cyclohexadiisocyanat, Toluyldiisocyanat, Diphenylmethandiisocyanat, u. a. mit Polyolen, wie Trimethylolmethan, Trimethylolpropan, Ethylenglykol, Propylenglykol, 1,4-Butandiol, Neopentylglykol, Pentaerythrit u. a. einsetzen.

Schliesslich lassen sich nach dem erfindungsgemässen Verfahren als weitere reaktive Komponenten für die Umwandlung der Abbauprodukte in Präpolymere die Mischungen von aliphatischen Polyisocyanaten mit aromatischen Polyisocyanaten, wie Toluyldiisocyanat, Diphenyldiisocyanat, Naphtyldiisocyanat o. a. im Verhältnis 1 : 3 bis 3 : 1 einsetzen.

Zur Durchführung der erfindungsgemässen Verfahrens kann eine Anlage verwendet werden, die einen aus mindestens einem Vorratsbehälters mit Ausgangsmaterial beschickbaren Mischer aufweist, an dem auslaufseitig ein Niederdruck- und/oder Hochdruckreaktor angeschlossen ist. Erfindungsgemäss sind zur Fortsetzung der mechanischen Zerkleinerung während der Lösungsmittelbehandlung im Reaktorinneren auf das Ausgangsmaterial Scherkräfte ausübende, in beiden Richtungen in Rotation versetzbare Scherelemente auf einer hohl ausgebildeten beheizbaren Welle angeordnet und von einem aus hohl ausgebildeten beheizbaren Sektoren zusammengesetzten Mantel umgeben.

Mit der erfindungsgemässen Anlage lässt sich eine Verbesserung des Wärmeübergangs an die Masse des zu lösenden Ausgangsmaterials erzielen, wodurch eine einheitliche Temperaturverteilung im Reaktor zwischen 150 °C und 200 °C erreichbar ist. Aufgrund der einheitlichen Temperaturverteilung reichen die Temperaturen aus, um das Verfahren mit verhältnismässig kurzen Reaktions- und Lösezeiten durchzuführen. Bei Reaktionstemperaturen unter 200 °C ist weiterhin sichergestellt, dass Verfärbungen des Ausgangsmaterials durch den Abbau der Amine vermieden werden.

Für die erfindungsgemässe Anlage reicht grundsätzlich ein bei 150 °C bis 200 °C betriebener Normalreaktor aus, an dem ein Schutzgaskreislauf angeschlossen ist. Der Reaktor kann dabei für einen Vakuum- oder Ueberdruckbetrieb ausgelegt sein, wobei sowohl eine kontinuierliche wie diskontinuierliche Betriebsweise möglich ist.

Eine Ausgestaltung der erfindungsgemässen Anlage sieht einen Niederdruckreaktor vor, an dem ein über den Mischer geführter Schutzgaskreislauf angeschlossen ist, der mit einem Kondensator und einer vorzugsweise aus einer Pumpe und einem Hydrozyklon bestehenden Vakuumanlage in Verbindung steht.

Bei einer Ausgestaltung der erfindungsgemässen Anlage ist an einem Bodenauslauf des liegend angeordneten Niederdruckreaktors über eine Pumpe und ein Ventil mindestens ein mit dem Schutzgaskreislauf in Verbindung stehender Rührkesselreaktor angeschlossen.

Die erfindungsgemässe Anlage kann aber auch einen vorzugsweise als Rührwerksautoklav ausgebildeten, mit dem Schutzgaskreislauf in Verbindung stehenden Hochdruckreaktor aufweisen, der vom Bodenauslauf des Niederdruckreaktors über eine Hochdruckpumpe beschickbar ist.

Zur Vereinheitlichung der Temperaturverteilung im Reaktor sieht eine weitere Ausgestaltung der Erfindung vor, dass der Reaktor über eine Ringleitung beheizbare Einbauelemente sowie Misch- und Zerkleinerungseinrichtungen aufweist und mit Tauchrohren ausgestattet ist.

Um im Reaktionsraum zur Verbesserung des Stofftransportes intensiv wirksame Scherfelder zu erhalten, sieht eine weitere Ausgestaltung der erfindungsgemässen Anlage vor, dass die Misch- und Zerkleinerungseinrichtungen mit nach rückwärts gekrümmt endenden Blättern mit aufgerauhten Flanken ausgestattet sind und die freien Blattenden mit den Einbauten und der Reaktorinnenwand konische Spalten mit periodisch wechselnder Breite bilden.

Schliesslich sieht eine Ausgestaltung der erfindungsgemässen Anlage noch vor, dass diese einen einzigen diskontinuierlich betreibbaren liegenden Hochdruckreaktor aufweist.

Die Erfindung schafft die Möglichkeit, zur Aufbereitung von Polyurethan Ausgangsmaterial einzusetzen, das lediglich bis auf eine maximale Partikelgrösse von 30 mm vorzerkleinert ist. In vorteilhafter Weise erfolgt die Vorzerkleinerung des Ausgangsmaterials unter Vermischung mit einem Anteil der später als Lösungsmittelbestandteil verwendeten Polyole in einem beheizbaren Knetmischer mit zwei gegenläufigen Wellen mit Sigmaschaufeln. Dadurch werden eine gute Vorbenetzung der Polyurethanpartikelflächen mit Lösungsmittel erreicht, ein Teil der im Polyurethanzellenbereich eingeschlossenen Gase freigesetzt, der schädliche Sauerstoffgehalt reduziert, insbesondere die Agglomeration der Polyurethanpartikel durch die anschliessenden mechanischen Beanspruchungen in der nachfolgenden Reaktorzone vermieden und die Dosierbarkeit sowie die Wärmeleitfähigkeit der Masse des Ausgangsmaterials entscheidend erhöht.

Die weitgehende Entfernung des Luftsauerstoffs lässt sich durch anschliessende Evakuierung der Mischung im gleichen Anlagenteil und-/oder durch eine nachfolgende Spülung mit Schutzgas, beispielsweise $N_2$, bei Normaldruck bewirken, wobei der Mischer zweckmässig mit einer Austragsschnecke ausgestattet und vom übrigen Mischraum durch ein vakuumdichtes Zellrad getrennt ist. Damit lässt sich das benetzte Gemisch unmittelbar in den Zulaufraum des Reaktors unter genauer Dosierung einbringen.

Durch gegenläufige und selbstreinigende Wellen, die mit Misch- und Vorschubelementen ausgestattet sind, lassen sich im anschliessenden Reaktor starke Scherfelder erzeugen. Durch einen Füllungsgrad über 65 % des Reaktorraumes und durch optimierte Drehzahlen bei turbulenten, örtlich konstanten Strömungsbedingungen wird das Lösungsmittel intensiv an die Oberfläche der Polyurethanfragmente herangebracht und kommt durch die weitere Scherung der Partikel auch in Kontakt mit den inneren Phasengrenzflächen, so dass eine grössere Stoffaustauschfläche als bei einfacher Benetzung sowohl für die Abbaureaktion als auch für den Lösungsvorgang entsteht. Daraus resultiert ein verstärkter Stoffaustausch, der zu einer Verkürzung der Reaktions- und Lösezeiten führt.

Die erfindungsgemässen Misch- und Knetwerkzeuge im Reaktorinnern unterscheiden sich von üblichen Einrichtungen dieser Art dadurch, dass sie an den Flanken der Schaufeln, Leitbleche, Leisten, Reinigungselemente zsw. Reibflächen besitzen, die eine zerfasernde Wirkung auf die elastischen Partikel und eventuell doch noch entstehenden Agglomerate ausüben. Bereich der Schafelsegmente, der Leistenflanken und Reinigungssegmente lassen konische Spalte zwischen sich und der Reaktorwand entstehen, so dass zumindest zu Beginn des chemischen Abbaus parallel dazu die mechanische Zerkleinerung der Polyurethanpartikel fortgesetzt wird. Das erfindungsgemässe Verfahren hat also nicht nur den Vorteil, dass auf eine aufwendige Feinzerkleinerung der Polyurethananteile für die Zubereitung des Ausgangsmaterials verzichtet werden kann, sondern dass die während der Lösungsmittelbehandlung fortgesetzte mechanische Zerkleinerung laufend neue Oberflächen schafft, wodurch die Reaktion intensiviert und die Reaktionszeit entsprechend verkürzt wird.

Durch die erfindungsgemässe Beheizung des Reaktorinnenraumes über die Aussenwand wie auch über die Misch- und Knetwerkzeuge, die Schereinbauten und Wellen wird eine gegenüber üblichen Reaktoren vergrösserte Wärmeaustauschfläche erzielt. In Verbindung mit den durch das erfindungsgemässe Verfahren hervorgerufenen Strömungsbedingungen und der verbesserten Wärmeleitfähigkeit der Polyurethanmasse wird der Wärmeübergang und der konvektive Wärmetransport erheblich verbessert, so dass eine einheitliche Reaktionstemperatur in der jeweils erforderlichen Höhe mit einer Genauigkeit von ± 1 °C eingestellt werden kann. Hierdurch lassen sich einerseits Ueberhitzungsschäden an den Kontaktflächen verhindern und andererseits relativ niedrige Reaktionstemperaturen einhalten, so dass Verfärbungen durch den Abbau der Amine vermieden werden.

Dadurch, dass das Reaktionsgemisch im Gegenstrom beispielsweise mit Stickstoff durch- und überströmt wird, verhindert das im Kreislauf in den Prozess eingeführte Schutzgas einerseits die Oxydation und dient andererseits als Trägergas für die im Reaktor aus dem Ausgangsmaterial frei werdenden Dämpfe und Gase. Das Ausgangsmaterial kann nämlich während seines ursprünglichen Einsatzes und bei der Lagerung als Abfall Flüssigkeiten aller Art aufgenommen haben, die sich — wie beispielsweise Wasser — durch Hydrolyse schädlich auf die Alkoholyse auswirken würden. Nach der Erfindung werden diese Schadstoffe über einen Dampfraum des Reaktors mit dem Stickstoff abgezogen und gegebenenfalls in einem nachgeschalteten Kondensator niedergeschlagen und aus dem Kreislauf ausgeschieden. Gleichfalls können Sauerstoffspuren, solange sie nachgewiesen werden, mit Hilfe des Stickstoffes entfernt werden. Es versteht sich, dass im Bedarfsfalle ein Stickstoffaustausch im Kreislauf vorzunehmen ist. Zur Kostensenkung kann es auch bei Verwendung entsprechend grosser Stickstoffmengen vorteilhaft sein, eine Regenerierung des Stickstoffs durchzuführen.

Erfindungsgemäss lässt sich auch ein kontinuierlich arbeitender Niederdruckreaktor mit einem Stickstoffkreislauf durch einen diskontinuierlich arbeitenden Hochdruckreaktor als nachfolgender Anlagenteil, der die Gesamtanlage ergänzt, verwenden. Ebenso kann aber auch ein Hochdruckreaktor als Ersatz für den Niederdruckreaktor vorgesehen werden.

Diese und alle anlagentechnischen Varianten des Verfahrens sehen vor, dass als Reaktionszone ein kontinuierlich arbeitender Niederdruckreaktor und/oder kontinuierlich arbeitender Hochdruckreaktor verwendet wird.

Für den Niederdruckteil der Anlage eignet sich an sich jeder für die Durchführung von Niederdruckreaktionen einsetzbare Reaktor, der zur Durchführung des erfindungsgemässen Verfahrens für die Erzeugung starker Scherfelder ausgerüstet sein muss, relativ grosse Heizflächen aufweisen soll und gegebenenfalls eine differenzierte Beheizung einzelner Zonen zulässt.

Im Hochdruckteil der erfindungsgemässen Anlage kann an sich jeder Rührkesselautoklav herkömmlicher Bauart eingesetzt werden, sofern er mit bestimmten Misch- und Scherwerkzeugen, welche die oben beschriebenen angestrebten Scherfelder erzeugen, ausgerüstet ist. Es ist erfindungswesentlich, dass die Misch- und Scherwerkzeuge eine zerfasernde Wirkung durch aufgeraute Scherflächen und konische Scherspalte ausüben.

Bei ausschliesslicher Durchführung eines Hochdruckverfahrens eignet sich bei diskontinuierlicher Betriebsweise besonders gut ein liegender Reaktor, der für Drücke bis 50 bar ausgelegt ist.

Durch den erfindungsgemässen Einsatz spezieller Polyisocyanate lässt sich beim Normaldruckverfahren eine wesentliche Erweiterung der Skala anfallender Alkoholyseprodukte erreichen. Der Einsatz der Polyisocyanate beeinflusst die Weiterverarbeitung der Alkoholyseprodukte in folgender Weise :

Durch die Umsetzung der Alkoholyseprodukte mit speziellen Polyisocyanaten können vollwertige Polyurethanschaumstoffe und Polyurethanthermoplaste aufgebaut werden. Dabei heben sich Polyisocyanate der Art wie Isophorondiisocyanat, Cyclohexylen-1,4-diisocyanat, Trimethylhexamethylendiisocyanat und andere aliphatische Polyisocyanate als besonders vorteilhaft erwiesen. Die bekanntlich geringe Reaktivität der aliphatischen Isocyanate gegenüber den alkoholischen Hydroxylgruppen wird bei der Umsetzung der Alkoholyseprodukte durch die erhöhte Reaktivität der freien Aminogruppen mehr als kompensiert. Letztere enthalten die oligomeren Abbauprodukte. Deshalb ist die Verwendung von Isophorondiisocyanat zur Herstellung von neuen Polyurethanschaumstoffen aus Alkoholyseprodukten vorteilhafter als die Anwendung derartiger aromatischer Polyisocyanate wie Toluyldiisocyanat und anderer Diisocyanate.

Da Polyurethane auf der Basis von aliphatischen Polyisocyanaten erfahrungsgemäss eine erhöhte thermische Stabilität und Lichtstabilität gegenüber Polyurethanen auf der Basis aromatischer Polyisocyanate zeigen, lassen sich durch die Erfingung auf diesem Wege die Eigenschaften der im Recycling hergestellten Polyurethane zusätzlich verbessern.

Weiterhin sieht die Erfindung vor, als weitere aktive Komponenten die Addukte derartiger Polyisocyanate wie Isophorondiisocyanat, Hexamethylendiisocyanat, Trimethylenhexamethylendiisocyanat, Toluyldiisocyanat, Diphenylmethandiisocyanat, Cyclohexandiisocyanat u. a. in Verbindung mit derartigen Polyolen wie Trimethylolmethan, Trimethylolpropan, Ethylenglykol, Propylenglykol, 1,4-Butandiol, Neopentylglykol, Pentaerythrit u. a. vorteilhaft zur Umwandlung und Weiterverarbeitung von Alkoholyseprodukten in technisch anwendbare Polyurethane einzusetzen. Durch die Verwandung der Addukte können unter anderem auch Reaktanden mit drei funktionellen Gruppen geschaffen werden, mit deren Hilfe ein höherer Vernetzungsgrad in den Endprodukten erreicht wird. Das bedeutet insgesamt eine wesentliche Erweiterung der Palette der mit dem erfindungsgemässen Verfahren erzielbaren Recyclingprodukte.

Beim Einsatz der Rührkesselreaktoren anstelle liegender Reaktoren sollen die Einbauten bestimmte konstruktive Randbedingungen erfüllen, welche durch Geometrie-Kennzahlen vorgegeben werden. Es ist erfindungswesentlich, dass diese Kennzahlen innerhalb der nachfolgend angegebenen Bereiche liegen, wobei :

D der Reaktordurchmesser ;
d der Rührkreisdurchmesser ;
c der Bodenabstand ;
s die Breite der Einbauten ;
h die Breite des Rührblatts ;
H die Füllhöhe

bedeuten. Die Kennzahlbereiche sind folgende :

$D/d = 2,2\text{-}3,2$ ;
$c/d = 0,23\text{-}0,83$ ;
$f/d = 0,3\text{-}0,55$ ;
$h/d = 0,4\text{-}1,0$ ;
$H/D = 0,8\text{-}1,0$.

Die Anzahl der Leitbleche beträgt 4,6 oder 8.

Messwertgeber und Dosierleitungen für Gase und Flüssigkeiten sind in die Leitbleche integriert. Jede Zufuhr von Zusatzstoffen erfolgt im fluiden Zustand bis in die Nähe des Rührblatts. Als Rührer wird vorteilhaft ein modifizierter Impellerrührer verwendet, dessen drei Blätter nicht stetig gekrümmt sind, sondern in Wellennähe radial und erst im letzten Drittel rückwärts gekrümmt ausgebildet sind. Dadurch wird eine bessere Selbstzentrierung des Rührers auch bei starken Scherfeldern erreicht, die sich in der Nähe der Leitbleche bilden. Die Verbesserung des Lösevorganges wird erfindungsgemäss durch die Erzeugung hyperbolischer Scherfelder innerhalb der Ringwirbel erreicht. Die angegebenen Kennzahlbereiche gewährleisten dieses Ziel im Zusammenhang mit einer turbulenten Fluidströmung, die bereits bei $Re_M = 30$ bei konstanten Strömungsbeiwerten erreicht wird.

Es versteht sich, dass die Nutzung der Sekundärenergie aus den Kreislauf- und Produktströmen zur Beheizung des Mischers den Energiebedarf des Verfahrens reduziert sowie durch eine selektive Heizflächenbelastung Schwankungen im Energiehaushalt des Reaktors ausgeglichen werden und eine möglichst tiefe Reaktionstemperatur eingehalten wird.

In der Zeichnung sind Ausführungsbeispiele für eine Anlage bzw. für Anlagenteile zur Durchführung des erfindungsgemässen Verfahrens dargestellt. Es zeigen :

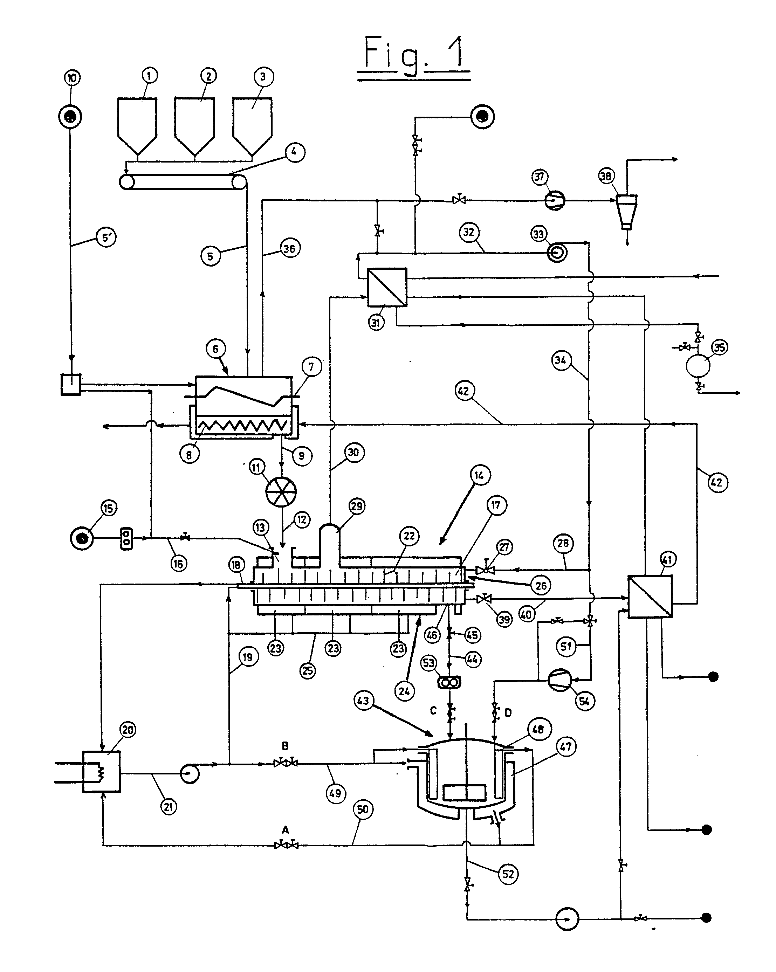

Figur 1 Anlagenteile im Fliessbild eines Anlagenschemas,

Figur 2 einen Rührwerksreaktor in einem vertikalen Schnitt,

Figur 3 den Reaktor im horizontalen Schnitt nach der Linie III-III der Fig. 2.

Vorratsbehälter 1, 2 und 3 beaufschlagen ein endlos umlaufendes Transportband 4 mit vorzerkleinertem Polyurethan, das über eine Leitung 5 einem beheizbaren Mischer 6 zugeführt wird, in dem zwei Mischwellen 7 und eine Austragsschnecke 8 angeordnet sind. Während dem Mischer 6 über die Leitung 5 vorzerkleinerte Polyurethanabfälle und/oder auch Polyurethanstaub zugeführt werden, erfolgt über eine weitere zum Mischer 6 führende Leitung 5' die erste Beaufschlagung des Ausgangsmaterials mit Polyolen aus einem Vorratsgefäss 10. Die Dosierung erfolgt in einem bestimmten Mischungsverhältnis, das in Abhängigkeit von der Betriebsweise variieren kann, wobei das Mischungsverhältnis beispielsweise in der Anlaufphase des Verfahrens etwa 1 : 1 beträgt.

Abhängig von den Mischzeiten ist das Volumen des Mischers 6 so bemessen, dass das Ausgangsmaterial über die Austragsschnecke 8 kontinuierlich über eine mit einem Zellrad 11 ausgestattete Leitung 12 einem Zulaufstutzen 13 eines Reaktors zufliesst. Weitere Zusätze und ergänzende Polyolanteile gelangen von einer Dosierstation 15 über eine Leitung 16 in den Innenraum 17 des Reaktors 14 und verwandeln das bereits mit Polyolen versetzte Ausgangsmaterial zu einem Reaktionsgemisch, so dass der Innenraum 17 des Reaktors 14 beim Erreichen der kontinuierlichen Betriebsweise ein verflüssigtes Gemisch enthält. Das nachfolgende eingespeiste Ausgangsmaterial braucht nicht mehr — wie bei den bekannten Verfahren — in vorgewärmtes Lösungsmittel dosiert werden.

Es versteht sich, dass in der Anlaufphase des Verfahrens oder bei diskontinuierlicher Betriebsweise des Reaktors 14 auch wahlweise reines Lösungsmittel, ein Gemisch mit Lösungsmittelüberschuss oder das zuvor beschriebene Gemisch als Startgemisch in aufgeheiztem Zustand benutzt werden kann. Die erfindungsgemässe Anlage lässt jede diesbezügliche Verfahrensvariante zu.

Der Reaktor 14 ist zur Durchführung des Niederdruckverfahrens als liegender Reaktor ausgebildet und besitzt zwei Misch- und Knetwellen 18, welche hohl ausgebildet sind und über Leitungen 19 und 21 mit Heizmedium beaufschlagt werden. Die achsparallel nebeneinander angeordneten Misch- und Knetwellen 19 tragen intensiv wirkende Scherelemente 22, die in beide Richtungen angetrieben werden können.

Der Innenraum 17 des Reaktors 14 ist von einem aus hohl ausgebildeten beheizbaren Sektoren 23 zusammengesetzten Mantel 24 umgeben, wobei die Sektoren 23 über eine von der Leitung 19 abzweigende Leitung 25 mit Heizmedium beaufschlagbar sind. Die Sektoren 23 des Reaktormantels 24 ermöglichen eine Differenzierte Energiezufuhr zu einzelnen Bereichen des Reaktors 14. Mit Hilfe bekannter Regeleinrichtungen lässt sich jede gewünschte Reaktionstemperatur zwischen 150 °C und 200 °C mit einer Genauigkeit von ± 1 °C erzielen.

Der normale Ablauf des Niederdruckverfahrens geht davon aus, dass das zugeführte Ausgangsmaterial im Reaktor 14 durch Alkoholyse vollständig aufgeschlossen und verflüssigt wird. Die Reaktionsmassen werden dabei im Gegenstrom von Stickstoff durchströmt. Das $N_2$-Gas tritt an einer Stirnseite 26 des Reaktors 14 über eine mit einem Ventil 27 ausgestattete Leitung 28 in den Reaktorinnenraum 17 ein und wird über einen Dampfsammelraum 29, über eine Leitung 30, einen Kondensator 31 und eine Leitung 32 mit Hilfe eines Ventilators 33 abgezogen und über eine Leitung 34 der Leitung 28 zur erneuten Beaufschlagung des Reaktorinnenraums 17 zugeführt. Zusammen mit aufgenommenen Reaktionsdämpfen und freigesetzten Gasen aus den Zellen des Ausgangsmaterials durchströmt der somit im Kreislauf geführte Gasstrom den vorzugsweise wassergekühlten Kondensator 31, in dem kondensierbare Dämpfe abgetrennt und über einen Sammelbehälter 35 abgeleitet werden.

An den Reaktorinnenraum 17, den Kondensator 31 und, über eine Leitung 36, auch an den Mischer 6 ist eine Vakuumanlage angeschlossen, die aus einer Flüssigkeitsringpumpe 37 und einem Hydrozyklon 38 besteht. Mit dieser Vakuumanlage können der Mischer 6 und der Reaktorinnenraum 17 unter Vakuum betrieben werden. Im Normalfall ist der Vakuumbetrieb auf den Mischer 6 beschränkt, diskontinuierlich und von kurzer Dauer, immer gefolgt von einer Spülung mit $N_2$-Gas. Der Betriebsdruck der Anlage beträgt dabei durchschnittlich 1 bar.

Die flüssigen Alkoholyseprodukte werden auf der Stirnseite 26 des Reaktors 14 über eine mit einem Ventil 39 ausgestattete Leitung 40 abgezogen und in einem Wärmetauscher 41 auf Raumtemperatur gekühlt. Die mit Hilfe des Wärmetauschers 41 gewonnene Sekundärenergie wird über eine Leitung 42 dem Mischer 6 zur Beheizung zugeführt.

Das zuvor beschriebene Niederdruckverfahren ist durch einen Rührkesselreaktor 43 ergänzbar, der über eine Leitung 44 mit einem Ventil 45 an den Bodenauslauf 46 des Reaktors 14 angeschlossen ist.

Die Ergänzung der Anlage durch den Rührkesselreaktor 43, der innen und aussen mit Heizeinrichtungen 47 bzw. 48 ausgestattet ist, die über Leitungen 49 und 50 im Kreislauf mit Heizmedium beaufschlagbar sind, ermöglicht einen teilweisen Aufschluss des Ausgangsmaterials mit verkürzter Verweilzeit im Reaktor 14, da das Mischfluid bei Reaktionstemperatur und Niederdruck dem Rührkesselreaktor 43 zugeführt wird und darin unter gleichen Reaktionsbedingungen weiter abgebaut und gelöst wird. Den zusätzlichen Anlagekosten stehen verschiedene Vorteile gegenüber, da der Reaktor 14 beispielsweise für die erste Phase des chemischen und physikalischen Abbaus des Ausgangsmaterials besser genutzt werden kann, während im Rührkesselreaktor 43 der Abschluss der Abbaureaktionen und der Lösungsvorgang bei geringerem Energieaufwand beendet werden können.

Weiterhin sind Eingriffe in den chemischen Abbau durch nachträgliche Zugabe von Stoffkomponenten möglich. Schliesslich kann anstelle eines Rührkesselreaktors 43 auch eine Mehrzahl kleinerer Rührkesselreaktoren zum Einsatz kommen, so dass gleichzeitig die Herstellung verschiedener Endprodukte der Alkoholyse möglich ist.

Der Anschluss des Rührkesselreaktors 43 an den Schutzgaskreislauf und die Heizeinrichtung 20 entspricht demjenigen, der im folgenden für den Hochdruckteil beschrieben wird.

Für die Durchführung des erfindungsgemässen normalen Hochdruckverfahrens wird im Anlagenschema des Niederdruckverfahrens der Rührkesselreaktor 43 durch einen Hochdruckreaktor, z. B. einen Rührwerksautoklaven, ersetzt. Der Anschluss des Rührwerksautoklaven erfolgt über die mit A, B, C, D markierten Stellen der zuvor beschriebenen Anlage. Der Hochdruckreaktor wird ebenfalls aus dem Niederdruckreaktor 14 über das Ventil 45 am Bodenauslass 46 beschickt, wozu in der Leitung 44 eine Hochdruckpumpe 53 vorgesehen ist. Der Niederdruckreaktor 14 dient bei diesem Verfahrensablauf unter Nutzung seiner Möglichkeiten zum physikalischen Abbau des Ausgangsmaterials als Vorstufe der Wärmeübertragung bei Temperaturen knapp unterhalb des Siedepunktes der jeweils eingesetzten Alkohole. Da das Hochdruckverfahren mit einem Ueberschuss an alkoholischen Lösungsmitteln arbeitet, entsteht ein durch Pumpen förderbares Mischfluid. Da die weitere chemische Aufspaltung des Ausgangsmaterials im Hochdruckreaktor vollzogen wird, ist keine vollständige Verflüssigung des Zwischenproduktes im Niederdruckreaktor 14 erforderlich. Im Hochdruckreaktor werden Drücke bis 50 bar und mehr bei Temperaturen zwischen 150 °C und 200 °C beim flüssigen Aggregatzustand der Lösungsmittel angewendet. Der Anschluss an den Schutzgaskreislauf erfolgt über die Schnittstelle D, wobei die Leitung 51 mit einem Kompressor 54 ausgestattet ist. Der Anschluss der Leitungen 49 und 50 an den Heizkreislauf der Heizeinrichtung 20 erfolgt an den Anschlussstellen A und B.

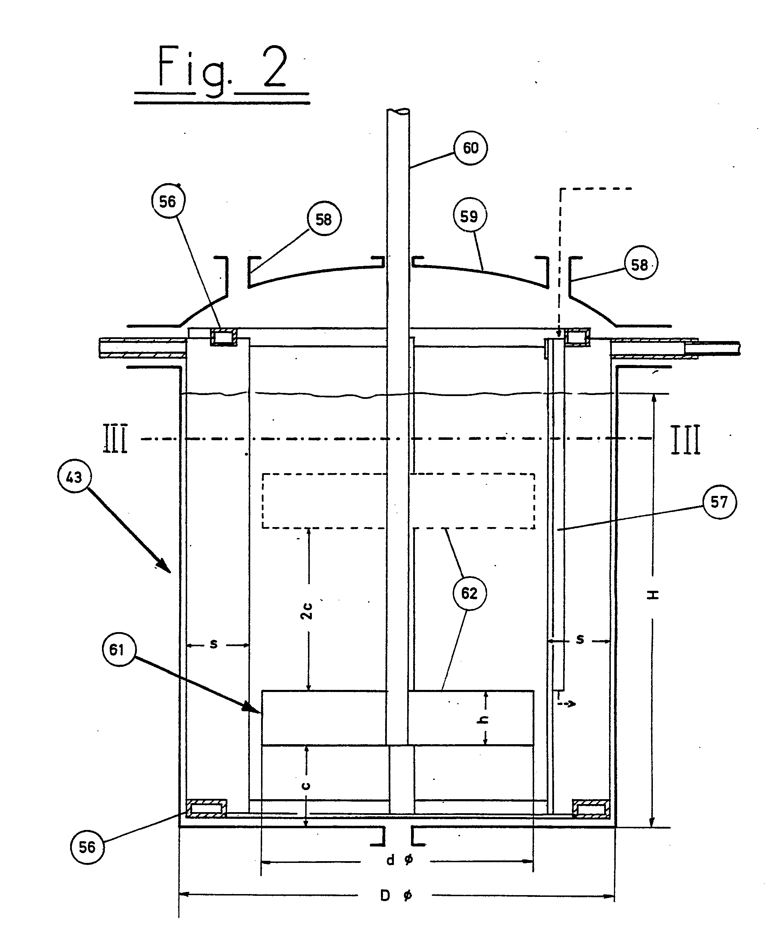

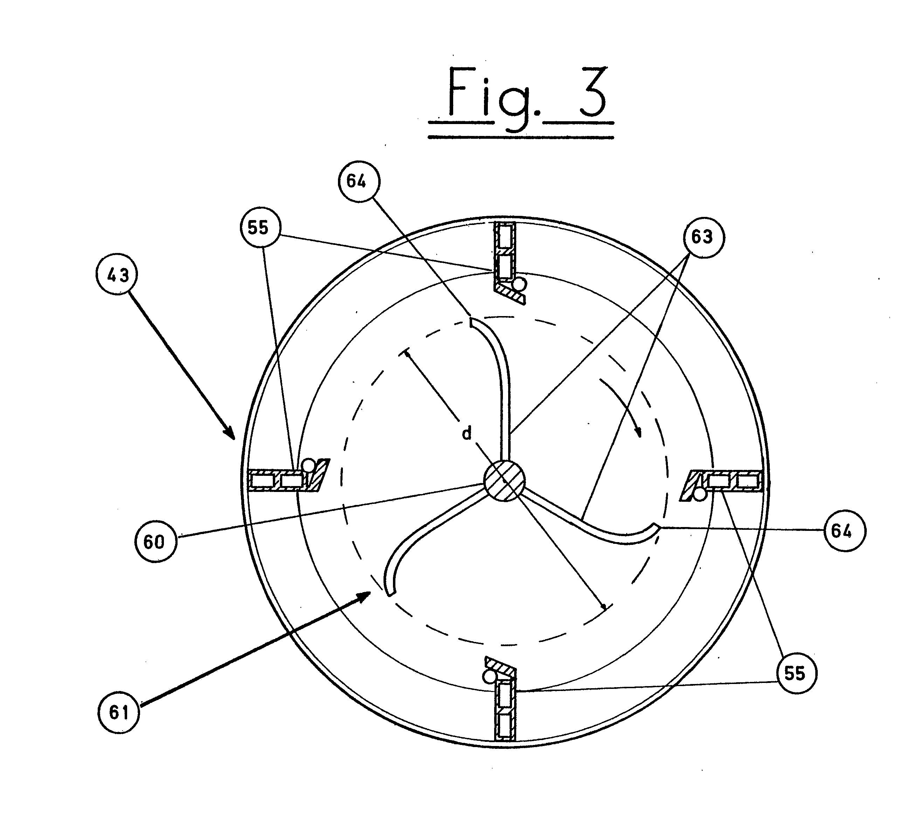

Wie die Fig. 2 und 3 zeigen, wird der Stofftransport des Lösevorganges im Rührwerksautoklav ebenso wie im Niederdruckrührkessel durch spezielle Einbauelemente 55 optimiert. Die Einbauten 55 sind über Ringleitungen 56 beheizbar und erhalten seitlich Durchführungen für Tauchrohre 57, über die Zusatzstoffe und Messwertgeber in den Reaktorraum eingeführt werden. Die Anordnung von Anschlussstutzen 58 und anderen Durchführungen im Deckel 59 richtet sich nach der Anordnung der Einbauelemente 55.

Auf einer angetriebenen Welle 60 angeordnete Scherelemente 61 besitzen aufgerauhte Flanken 62, wobei die Blätter 63 der Scherelemente 61 nach rückwärts gekrümmt enden, so dass freie Blattenden 64 mit den Einbauelementen 55 und der Reaktorinnenwand konische Spalte mit periodisch wechselnder Breite bilden.

Analog zum Niederdruckverfahren kann die thermische Energie der Alkoholyseprodukte des Hochdruckverfahrens durch Wärmetausch zurückgewonnen werden. Ueberflüssige Lösungsmittelanteile werden unter Anwendung bekannter Trennverfahren abgetrennt und dem Verfahren erneut zugeführt.

Beim diskontinuierlichen Hochdruckverfahren findet ein liegender Hochdruckreaktor anstelle des beschriebenen Niederdruckreaktors 14 Verwendung. Die Ausführungen der beiden Anlagenteile unterscheiden sich wesentlich nur in der für die hohen Drücke erforderlichen Wandstärken und Armaturen. Auf den Rührkesselreaktor 43 kann dabei verzichtet werden.

Folgende Beispiele erläutern die möglichen Abläufe des erfindungsgemässen Verfahrens :

1. Der durch Niederdruck-Alkoholyse abzubauende Polyurethan-Abfall ist ein auf der Basis eines Polypropylenpolyols (Molekulargewicht ca. 2 000, OH-Zahl ca. 56) und Toluyldiisocyanats (ca. 80 % des 2,4-Isomers) aufgebauter Polyurethanschaumstoff mit den Eigenschaften :

| | |
|---|---|
| Rohdichte : | 35 kg/m$^3$ |
| Zugfestigkeit : | 12,7 N/cm$^2$ (1,3 kp/cm$^2$) |
| Bruchdehnung : | 250 % |

a) Diskontinuierliche Betriebsweise : Zu einer Mischung aus 1 000 Teilen Polypropylenpolyol (Molekulargewicht 2 000, OH-Zahl ca. 56) und 45 Teilen Dibutylzinndilaurat, welche bei 50 bis 60 °C aufgeschmolzen wurde, werden im Mischer 6 1 000 Teile des auf 0 bis 30 mm vorzerkleinerten Polyurethan-Schaumstoffes in kurzer Zeit zugegeben und bei ständiger Spülung mit N$_2$-Gas 2 bis 3 Minuten gemischt. Dabei läuft die Austragsschnecke 8 rückwärts, um die Mischwirkung zu unterstützen. Das Mischgut nimmt dabei die Temperatur der beheizten Mischerwand an. Anschliessend wird die Austragsschnecke 8 in Förderrichtung angetrieben und das mit Polyol benetzte Mischgut in einem Arbeitsgang von 10 min über das vakuumdichte Schleusenrad 11 in den Reaktor 14 gegeben, in dem bereits 1 000 Teile des obengenannten Polypropylenpolyols mit 25 Teilen Dibutylzinndilaurat auf die Reaktionstemperatur von 180 °C vorerwärmt waren. Die Mengen werden so bemessen, dass der Innenraum 17 des Reaktors 14 nach der letzten Zugabe der Vorstoffmischung zu 75 % gefüllt wird.

Während dieser Phase und im Laufe der nachfolgenden Reaktion wird ständig N$_2$-Gas im Gegenstrom durch den Reaktor 14 geführt. In der Anlaufphase wird die chemische Abbaureaktion durch gleichzeitigen mechanischen Abbau der Polyurethan-Teilchen durch Scherung bei FROUDE-Zahlen von ca. 0,25-berechnet nach $Fr = (R\omega^2/g)^{0,5}$-unterstützt. Dieser allgemeingültige Wert entspricht bei dem verwendeten Reaktor einer Drehzahl der Wellen von 20 min$^{-1}$.

Im Verlauf der Abbaureaktion, welche bis zur vollständigen Verflüssigung der Abbauprodukte etwa 50 bis 75 min dauert, wird die Fr-Zahl bis auf Werte zwischen 0,75 und 1,0 gesteigert. Dabei wird eine Steigerung des Wärmedurchgangswertes k von 125,5 (30) auf 209,3 KJ/m$^2$ hK (50 kcal/m$^2$h K) erreicht. Am Ende liegt ein in Methanol vollständig lösliches Produkt vor. Gibt man zu 100 Teilen des Reaktionsproduktes (Alkoholyseprodukt) 1 Teil eines auf Siliconbasis aufgebauten oberflächenaktiven Stoffes, 0,35 Teile Morpholin, 3,3 Teile Wasser und 65 Teile Isophorondiisocyanat, so erhält man nach guter Durchmischung im Rührkessel und Ausguss in eine Form einen Schaumstoff, der nach vier Tagen die Eigenschaften

| | |
|---|---|
| Rohdichte : | 42 kg/m$^3$ |
| Zugfestigkeit : | 11,7 N/cm$^2$ (1,2 kp/cm$^2$) |
| Bruchdehnung : | 260 % |

zeigt.

b) Kontinuierliche Betriebsweise : Das gleiche Anfangsgemisch wird ohne Vorgabe von Lösungsmittel in den in der Anlaufphase leeren Reaktor 14 gegeben und bei Fr-Zahlen von 0,2 auf die Reaktionstemperatur von 180 °C erhitzt. Dieser Vorgang dauert unter ständigem Nachschub von vorbenetztem Vorstoff so lange an, bis der Innenraum 17 des Reaktors 14 zu 75 % mit verflüssigtem Abbauprodukt gefüllt ist. Gleichzeitig werden die Fr-Zahlen auf ca. 0,75 gesteigert.

Nach ca. 70 bis 80 min ist mit der Verflüssigung des eingespeisten Vorstoffs der Umschaltpunkt zu kontinuierlicher Betriebsweise erreicht, und die abgezogene Produktmenge wird durch Nachdosierung einer entsprechenden vorbenetzten Vorstoffmenge ersetzt. Durch diese Betriebsweise lassen sich ebenfalls in Methanol vollständig lösbare Abbauprodukte bei geringerem Lösungsmitteleinsatz erreichen. Die Weiterverarbeitung erfolgt wie unter a) im Rührkesselreaktor 43. Man erhält Schaumstoffprodukte mit ähnliche Eigenschaft.

2. Aus den genannten Polyurethan-Vorstoffen wird ein Abbauprodukt wie in Beispiel 1.a) oder 1.b) hergestellt.

100 Teile dieses Abbauproduktes werden mit 50 Teilen der Addukte des Toluyldiisocyanats und des Trimethylolpropans sowie 30 Teilen Isophorondiisocyanat im Rührkesselreaktor 43 vermischt und homogenisiert, um Hartschaumstoffe zu erhalten.

3. Aus Polyurethan-Vorstoffen wird im Niederdruckverfahren nach Beispiel 1.a) oder 1.b) ein in Methanol vollständig lösliches Abbauprodukt hergestellt.

Gibt man — wie in Beispiel 1 — zu 100 Teilen des Reaktionsprodukts 1 Teil eines oberflächenaktiven Stoffs, 0,35 Teile Morpholin, 3,3 Teile Wasser, 65 Teile Isophorondiisocyanat und setzt zusätzlich entsprechend modifizierte Fettcarbonsäuren und/oder höhere Fettsäuren hinzu, so erhält man einen hochsaugfähigen Weichschaumstoff, mit dem z. B. Erdöl and andere Oele von Wasseroberflächen entfernt werden können.

**Patentansprüche**

1. Verfahren zur Aufbereitung von aus Abfallstoffen erhaltenem Polyurethan durch Alkoholyse oder Acidolyse, wobei das Polyurethan zunächst mechanisch zu einem Ausgangsmaterial zerkleinert und anschliessend bei einer Temperatur von über 120 °C mit Lösungsmitteln behandelt wird, dadurch gekennzeichnet, dass zumindest zu Beginn der bis zur Verflüssigung des Ausgangsmaterials andauernden Lösungsmittelbehandlung, die bei einer Reaktionstemperatur unter 200 °C durchgeführt wird, die mechanische Zerkleinerung des bereits im chemischen Abbau befindlichen Ausgangsmaterials fortgesetzt wird.

2. Verfahren nach Anspruch 1, dadurch gekennzeichnet, dass das aus dem Ausgangsmaterial und Lösungsmitteln unter mechanischer Zerkleinerung und chemischem Abbau sich bildende Reaktionsgemisch im Gegenstrom zu einem die Oxydation verhindernden Schutzgas geführt wird, das die Reaktionszone durchspült und dabei aus dem Reaktionsgemisch freigesetzte Dämpfe und Gase abzieht.

3. Verfahren nach den Ansprüchen 1 und 2, dadurch gekennzeichnet, dass das Ausgangsmaterial in einer Stückgrösse bis zu 30 mm unter Vermischung mit Polyolen der vorzugsweise unter Ueberdruck betriebenen Reaktionszone zugeführt wird.

4. Verfahren zur Verwendung der nach dem Verfahren gemäss Anspruch 1 erhaltenen Lösung, dadurch gekennzeichnet, dass Polyisocyanate wie Isophorondiisocyanat, Trimethylhexamethylendiisocyanat, Cyclohexylen-1,4-diisocyanat und andere aliphatische Polyisocyanate für die weitere Aufbereitung der Alkoholyseprodukte verwendet werden.

5. Verfahren nach Anspruch 4, dadurch gekennzeichnet, dass als weitere reaktive Komponenten die Addukte von Polyisocyanaten, wie Isophorondiisocyanat, Hexamethylendiisocyanat, Trimethylhexamethylendiisocyanat, Cyclohexandiisocyanat, Toluyldiisocyanat, Diphenylmethandiisocyanat u. a. mit Polyolen wie Trimethylolmethan, Trimethylolpropan, Ethylenglykol, Propylenalkylol, 1,4-Butandiol, Neopentylglykol, Pentaerythrit u. a. zur Umwandlung der Alkoholyseprodukte in Präpolymere von Polyurethanen eingesetzt werden.

6. Verfahren nach Anspruch 5, dadurch gekennzeichnet, dass als weitere reaktive Komponenten für die Umwandlung der Abbauprodukte in Präpolymere die Mischungen von aliphatischen Polyisocyanaten mit aromatischen Polyisocyanaten, wie Toluyldiisocyanat, Diphenyldiisocyanat, Naphthyldiisocyanat u. a. im Verhältnis 1 : 3 bis 3 : 1 eingesetzt werden.

7. Verfahren nach Anspruch 6, dadurch gekennzeichnet, dass als Reaktionszone ein kontinuierlich arbeitender Niederdruckreaktor und/oder kontinuierlich oder diskontinuierlich arbeitender Hochdruckreaktor verwendet wird.

8. Anlage mit einem aus mindestens einem Vorratsbehälter mit Ausgangsmaterial beschickbaren Mischer, an dem auslaufseitig ein Niederdruck- und/oder Hochdruckreaktor angeschlossen ist, zur Durchführung des Verfahrens nach Anspruch 1, dadurch gekennzeichnet, dass im Reaktorinnern (17) auf das Ausgangsmaterial Scherkräfte ausübende, in beiden Richtungen in Rotation versetzbare Scherelemente (61) auf einer hohl ausgebildeten beheizbaren Welle (60) angeordnet und von einem aus hohl ausgebildeten beheizbaren Sektoren (23) zusammengesetzten Mantel (24) umgeben sind.

9. Anlage nach Anspruch 8, gekennzeichnet durch einen Niederdruckreaktor (14), an dem ein über den Mischer (6) geführter Schutzgaskreislauf angeschlossen ist, der mit einem Kondensator (31) und einer vorzugsweise aus einer Pumpe (37) und einem Hydrozyklon (38) bestehenden Vakuumanlage in Verbindung steht.

10. Anlage nach den Ansprüchen 8 und 9, dadurch gekennzeichnet, dass an einem Bodenauslauf (46) des liegend angeordneten Niederdruckreaktors (14) über eine Pumpe und ein Ventil (45) mindestens ein mit dem Schutzgaskreislauf in Verbindung stehender Rührkesselreaktor (43) angeschlossen ist.

11. Anlage nach Anspruch 8, dadurch gekennzeichnet, dass der Rührkesselreaktor (43) als ein mit dem Schutzgaskreislauf in Verbindung stehender Hochdruckreaktor ausgebildet ist, der vom Bodenauslauf (46) des Niederdruckreaktors (14) über eine Hochdruckpumpe (53) beschickbar ist.

12. Anlage nach den Ansprüchen 10 und 11, dadurch gekennzeichnet, dass der Reaktor (43) über Ringleitungen (56) beheizbare Einbauelemente (55) sowie als Scherelemente (61) ausgebildete Misch- und Zerkleinerungseinrichtungen aufweist und mit Tauchrohren (57) ausgestattet ist.

13. Anlage nach den Ansprüchen 11 und 12, dadurch gekennzeichnet, dass die Scherelemente (61) mit nach rückwärts gekrümmt endenden Blättern (63) mit aufgerauhten Flanken (62) ausgestattet sind und die freien Blattenden (64) mit den Einbauelementen (55) und der Reaktorinnenwand konische Spalte mit periodisch wechselnder Breite bilden.

14. Anlage nach Anspruch 8, gekennzeichnet durch einen einzigen diskontinuierlich betreibbaren liegenden Hochdruckreaktor.

## Claims

1. Method for reclaiming polyurethane from waste materials by alcoholysis or acidolysis, the polyurethane at first being crushed to a base material and thereafter treated by solvents at a temperature above 120 °C, characterized in that at least at the beginning of the solvent treatment, which is conducted at a reaction temperature below 200 °C and continues until fluidification of the base material, the crushing of the base material continues during the chemical decomposition thereof.

2. Method according to claim 1, characterized in that the reaction mixture consisting of the base material and the solvents during the process of mechanical crushing and chemical decomposition is placed in a countercurrent of an inert gas for preventing oxydation, which gas cleans the reaction zone and thereby removes vapors and gases liberated from the reaction mixture.

3. Method according to claims 1 and 2, characterized in that the base material, in a size up to 30 mm and mixed with polyols, is supplied to the reaction zone, which is preferably operated at overpressure.

4. Method for the application of the solvent produced according to claim 1, characterized in that polyisocyanates, as isophorondiisocyanate, trimethylhexamethylendiisocyanate, cyclohexylene-1,4-diisocyanate and other aliphatic polyisocyanates, are being used for further reprocessing of the alcoholysis products.

5. Method according to claim 4, characterized in that the adducts from polyisocyanates, as isophorondiisocyanate, hexamethylenediisocyanate, trimethylhexamethylendiisocyanate, cyclohexandiisocyanate, toluyldiisocyanate, diphenylmethandiisocyanate and others are used as further reactive components together with polyols, are trimethylolmethan, trimethylolpropane, ethylenglycol, propylenalkylol, 1,4-butandiol, neopentylglycol, pentaerythrit and others for the transmission of the alcoholysis products in prepolymeres of polyurethanes.

6. Method according to claim 5, characterized in that the mixtures of aliphatic polyisocyanates with aromatic polyisocyanates, as toluyldiisocyanate, diphenyldiisocyanate, naphthyldiisocyanate or others in a relation 1 : 3 up to 3 : 1 are being used as further reactive components for the transmission of the decomposition products into prepolymeres.

7. Method according to claim 6, characterized in that a continuously working low pressure reactor and/or a continuously or discontinuously working high pressure reactor is being used as a reaction zone.

8. Apparatus with a mixer to be supplied with base material from at least one supply container, the outlet side of the mixer being connected with a low and/or a high pressure reactor for performing the method defined in claim 1, characterized in that scissors elements (61) rotatable in both directions are mounted on a hollow, heatable shaft (60) in the interior or the reactor (17) for performing cutting forces on the base material, and that the scissors elements (61) are surrounded by a sleeve (24) consisting of hollow heatable sectors (23).

9. Apparatus according to claim 8, characterized by a low pressure reactor (14) connected via a mixer (6) with an inert gas circulation linked to a condenser (31) and a vacuum plant, preferably consisting of a pump (37) and a hydrocyclone (38).

10. Apparatus according to claims 8 and 9, characterized in that at least one agitator vessel reactor (43) linked with the inert gas circulation is connected with a floor outlet (46) of the laying low pressure reactor (14) via a pump and a valve (45).

11. Apparatus according to claim 8, characterized in that the agitator vessel reactor (43) is designed as a high pressure reactor linked with the inert gas circulation, which reactor (43) can be loaded from the floor outlet (46) of the low pressure reactor (14) via a high pressure pump (53).

12. Apparatus according to claim 10 or 11, characterized in that the reactor (43) is provided with built-in elements (55) heatable via ring conduits (56), with mixing and crushing elements designed as scissors elements (61) and with dip pipes (57).

13. Apparatus according to claim 11 and 12, characterized in that the scissors elements (61) are provided with backwards curved ending blades (63) with roughened flanks (62), and that the free blade ends (64) together with the built-in elements (55) and the inner reactor wall define conical gaps with periodically changing width.

14. Apparatus according to claim 8, characterized by a single laying high pressure reactor for intermittent service.

## Revendications

1. Procédé pour le retraitement, par alcoolyse ou acidolyse, de polyuréthanne tiré de matières de déchet, dans lequel on fragmente tout d'abord mécaniquement le polyuréthanne pour obtenir une matière de départ et ensuite on le traite par des solvants à une température supérieure à 120 °C, caractérisé par le fait qu'au moins au début du traitement par solvant qui dure jusqu'à la liquéfaction de la matière de départ et que l'on conduit à une température de réaction inférieure à 200 °C, on poursuit la fragmentation mécanique de la matière de départ qui se trouve déjà en cours de dégradation chimique.

2. Procédé selon la revendication 1, caractérisé par le fait que l'on conduit le mélange réactionnel se formant en partant de la matière de départ et des solvants, avec fragmentation mécanique et dégradation chimique, à contre-courant d'un gaz protecteur empêchant l'oxydation, qui balaie la zone de réaction et retire alors des vapeurs et des gaz libérés par le mélange réactionnel.

3. Procédé selon les revendications 1 et 2, caractérisé par le fait que l'on amène la matière de départ, avec une grosseur de fragments allant jusqu'à 30 mm, en la mélangeant à des polyols, à la zone de réaction fonctionnant de préférence sous une surpression.

4. Procédé d'utilisation de la solution obtenu selon le procédé suivant la revendication 1, caractérisé par le fait que l'on utilise des polyisocyanates comme le diisocyanate d'isophorone, le diisocyanate de triméthylhexaméthylène, le diisocyanate de cyclohexylène-1,4 et d'autres polyisocyanates aliphatiques pour le retraitement plus poussé des produits d'alcoolyse.

5. Procédé selon la revendication 4, caractérisé par le fait que l'on utilise comme autres constituants réactifs les produits d'addition de polyisocyanates comme le diisocyanate d'isophorone, le diisocyanate d'hexaméthylène, le diisocyanate de triméthylhexaméthylène, le diisocyanate de cyclohexylène, le diisocyanate de tolylène, le diisocyanato-diphénylméthane etc. avec des polyols comme le triméthylolméthane, le triméthylolpropane, l'éthylèneglycol, le propylèneglycol, le 1,4-butanediol, le néopentylèneglycol, le pentaérythritol etc., pour la conversion des produits d'alcoolyse en prépolymères de polyuréthannes.

6. Procédé selon la revendication 5, caractérisé par le fait que comme autres constituants réactifs pour la conversion des produits de dégradation en prépolymères, on utilise les mélanges de polyisocyanates aliphatiques et de polyisocyanates aromatiques comme le diisocyanate de tolylène, le diisocyanato-biphényle, le diisocyanate de naphtylène etc. en rapport de 1 : 3 à 3 : 1.

7. Procédé selon la revendication 6, caractérisé par le fait que l'on utilise comme zone de réaction un réacteur à basse pression à fonctionnement continu et/ou un réacteur à haute pression à fonctionnement continu ou discontinu.

8. Installation munie d'un mélangeur pouvant être alimenté, depuis au moins un réservoir, en matière de départ, auquel est raccordé du côté de la sortie un réacteur à basse pression et/ou à haute pression, pour la mise en œuvre du procédé selon la revendication 1, caractérisé par le fait qu'à l'intérieur (17) du réacteur, des éléments de cisaillement (61) pouvant être mis en rotation dans les deux sens et exerçant des forces de cisaillement sur la matière première sont disposés sur un arbre (60) conçu sous forme creuse, pouvant être chauffés et sont entourés d'une enveloppe (24) composée de secteurs (23) conçus sous forme creuse, pouvant être chauffés.

9. Installation selon la revendication 8, caractérisée par un réacteur à basse pression (14) auquel est raccordé un circuit de gaz protecteur passant par le mélangeur (6) et qui est en communication avec un condenseur (31) et une installation à vide de préférence formée d'une pompe (37) et d'un hydrocyclone (38).

10. Installation selon les revendications 8 et 9, caractérisée par le fait qu'à une sortie de fond (46) du réacteur à basse pression (14) disposé horizontalement est raccordé, par l'intermédiaire d'une pompe et d'une valve (45) au moins un réacteur à récipient d'agitation (43) qui est en communication avec le circuit de gaz protecteur.

11. Installation selon la revendication 8, caractérisée par le fait que le réacteur à récipient d'agitation (43) est conçu sous la forme d'un réacteur à haute pression qui est en communication avec le circuit de gaz protecteur et qui peut être alimenté par la sortie de fond (46) du réacteur à basse pression (14) par l'intermédiaire d'une pompe à haute pression (53).

12. Installation selon les revendications 10 et 11, caractérisée par le fait que le réacteur (43) présente des éléments intérieurs (55) pouvant être chauffés par l'intermédiaire de tuyaux annulaires (56) ainsi que des dispositifs de mélange et de fragmentation conçus sous forme d'éléments de cisaillement (61) et est équipé de tubes plongeurs (57).

13. Installation selon les revendications 11 et 12, caractérisée par le fait que les éléments de cisaillement (61) sont équipés de pales (63) se terminant sous forme courbée vers l'arrière, à flancs rugueux (62) et que les extrémités (64) des pales forment, avec les éléments intérieurs (55) et la paroi intérieure du réacteur, des espacements coniques de largeur variant périodiquement.

14. Installation selon la revendication 8, caractérisée par un seul réacteur à haute pression horizontal pouvant fonctionner de façon discontinue.

# Fig. 1

# Fig. 2

# Fig. 3

0 031 538